(19) Europäisches Patentamt / European Patent Office / Office européen des brevets

(11) **EP 3 136 138 A1**

(12) **EUROPEAN PATENT APPLICATION**
published in accordance with Art. 153(4) EPC

(43) Date of publication:
**01.03.2017 Bulletin 2017/09**

(51) Int Cl.:
*G02B 1/14* (2015.01)      *B32B 27/00* (2006.01)
*G02B 1/115* (2015.01)      *G02C 7/02* (2006.01)

(21) Application number: **15783211.4**

(22) Date of filing: **24.04.2015**

(86) International application number:
**PCT/JP2015/062599**

(87) International publication number:
**WO 2015/163466 (29.10.2015 Gazette 2015/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.04.2014  JP 2014090739**

(71) Applicant: **Hoya Lens Thailand Ltd.**
**Patumthani (TH)**

(72) Inventor: **MAEDA, Akihiro**
**Tokyo 161-8525 (JP)**

(74) Representative: **Hoffmann Eitle**
**Patent- und Rechtsanwälte PartmbB**
**Arabellastraße 30**
**81925 München (DE)**

(54) **SPECTACLE LENS**

(57)      Provided is a spectacle lens which exhibits excellent abrasion resistance. The spectacle lens includes a lens substrate and a hard coat layer having a film thickness of 5 $\mu$m or more and 100 $\mu$m or less and has an indentation hardness of the hard coat layer of 25 mgf/$\mu$m$^2$ or more and 100 mgf/$\mu$m$^2$ or less at 30 mgf load.

EP 3 136 138 A1

## Description

Technical Field

The present invention relates to a spectacle lens having a hard coat layer.

Background Art

Although spectacle lenses are required to have various properties, a nature to be hardly scratched as a user uses the spectacle lens in daily life, namely, abrasion resistance is required. Surface films such as a hard coat film and an antireflection film (AR film) are formed on the surface of a spectacle lens in consideration of abrasion resistance. The evaluation on abrasion resistance is carried out for selection of the spectacle lens substrate or the surface film in the development stage of the spectacle lens or for quality control in the manufacturing process of the spectacle lens.

There are a variety of causes for the scratches formed in actual status of use, and it has not been necessarily able to cope with scratches of the spectacle lens formed in actual use only by the testing methods of the related art.

In Patent Literature 1, a spectacle lens which has a surface film and a substrate and is characterized in that the tip bulge starting load ($W_l$) determined by the testing method using a diamond stylus is 60 g or more is disclosed as a spectacle lens exhibiting high abrasion resistance with respect to the scratches as formed when the spectacle lens is rubbed with a wood or a metal or hit by a pebble in actual use.

Citation List

Patent Literature

Patent Literature 1: JP 2013-205777 A

Summary of Invention

Technical Problem

According to the spectacle lens described in Patent Literature 1, although it is possible to enhance the scratch resistance to be evaluated by film peeling off load value in the diamond scratch test, there is room for improvement in abrasion resistance to be evaluated by the Bayer test and the like.

Accordingly, an object of the present invention is to provide a spectacle lens which exhibits excellent abrasion resistance.

Solution to Problem

The present invention relates to the following spectacle lens.

[1] A spectacle lens including a lens substrate and a hard coat layer having a film thickness of 5 $\mu$m or more and 100 $\mu$m or less, in which an indentation hardness of the hard coat layer at 30 mgf load is 25 mgf/$\mu$m$^2$ or more and 100 mgf/$\mu$m$^2$ or less.

[2] The spectacle lens according to [1], in which a film thickness of the hard coat layer is 7 $\mu$m or more and 100 $\mu$m or less.

[3] The spectacle lens according to [1] or [2], in which an indentation hardness of the hard coat layer at 5000 mgf load is 30 mgf/$\mu$m$^2$ or more and 100 mgf/$\mu$m$^2$ or less.

[4] The spectacle lens according to any one of [1] to [3], in which a difference ($IH_{30}$ - $IH_{5000}$) between an indentation hardness $IH_{5000}$ at 5000 mgf load and an indentation hardness $IH_{30}$ at 30 mgf load of the hard coat layer is 3 mgf/$\mu$m$^2$ or more.

[5] The spectacle lens according to any one of [1] to [4], in which the hard coat layer is obtained by curing a curable composition containing inorganic oxide particles and a silicon compound having a hydrolyzable group.

[6] The spectacle lens according to [5], in which the curable composition further contains a polyfunctional epoxy compound.

[7] The spectacle lens according to any one of [1] to [6], further including a primer layer between the lens substrate and the hard coat layer.

[8] The spectacle lens according to anyone of [1] to [7], further including an interference fringe suppressing layer between the lens substrate and the hard coat layer.

[9] The spectacle lens according to any one of [1] to [8], further including an antireflection layer on the hard coat layer.

Advantageous Effects of Invention

According to the present invention, it is possible to provide a spectacle lens which exhibits excellent abrasion resistance.

Description of Embodiments

The spectacle lens of the present invention includes a lens substrate and a hard coat layer having a film thickness of 5 $\mu$m or more and 100 $\mu$m or less and has an indentation hardness (hereinafter, also simply referred to as the "$IH_{30}$") of the hard coat layer of 25 mgf/$\mu$m$^2$ or more and 100 mgf/$\mu$m$^2$ or less at 30 mgf load. The spectacle lens of the present invention exhibits excellent abrasion resistance. In addition, the spectacle lens of the present invention exhibits excellent crack resistance while exhibiting excellent scratch resistance and excellent abrasion resistance.

A spectacle lens having a high film peeling off load value is obtained as the film thickness of the hard coat layer is 5 $\mu$m or more and 100 $\mu$m or less. In addition, the film thickness of the hard coat layer is preferably 7 $\mu$m or more, more preferably 15 $\mu$m or more, and even more preferably 18 $\mu$m or more from the viewpoint of obtaining a spectacle lens exhibiting a high film peeling off load value. The film thickness is preferably 80 $\mu$m or less, more preferably 60 $\mu$m or less, and even more preferably 40 $\mu$m or less from the viewpoint of ease of manufacture. The "film thickness" means an average film thickness, and the measuring method thereof is described in Examples.

It is possible to obtain excellent abrasion resistance as the $IH_{30}$ of the hard coat layer of the spectacle lens of the present invention is 25 mgf/$\mu$m$^2$ or more and 100 mgf/$\mu$m$^2$ or less.

The $IH_{30}$ is preferably 30 mgf/$\mu$m$^2$ or more, more preferably 40 mgf/$\mu$m$^2$ or more, even more preferably 55 mgf/$\mu$m$^2$ or more, and even more preferably 58 mgf/$\mu$m$^2$ or more and preferably 80 mgf/$\mu$m$^2$ or less from the viewpoint of enhancing the abrasion resistance.

The term "indentation hardness" is a value measured in conformity with the International Standard ISO 14577 by using a nano-indenter apparatus. Incidentally, the "indentation hardness" means the measured value for at least one surface provided with a hard coat layer.

The indentation hardness (hereinafter, also simply referred to as the $IH_{5000}$") of the hard coat layer of the spectacle lens at 5000 mgf load is preferably 30 mgf/$\mu$m$^2$ or more, more preferably 40 mgf/$\mu$m$^2$ or more, and even more preferably 50 mgf /$\mu$m$^2$ or more from the viewpoint of obtaining high abrasion resistance, and it is preferably 100 mgf/$\mu$m$^2$ or less, more preferably 80 mgf/$\mu$m$^2$ or less, even more preferably 70 mgf/$\mu$m$^2$ or less, even more preferably 65 mgf/$\mu$m$^2$ or less, and even more preferably 63 mgf/$\mu$m$^2$ or less from the viewpoint of obtaining high crack resistance.

The difference ($IH_{30}$ - $IH_{5000}$) between the $IH_{30}$ and the $IH_{5000}$ of the hard coat layer of the spectacle lens of the present invention is preferably 3 mgf/$\mu$m$^2$ or more, more preferably 5 mgf/$\mu$m$^2$ or more, and even more preferably 10 mgf/$\mu$m$^2$ or more and preferably 30 mgf/$\mu$m$^2$ or less from the viewpoint of enhancing the crack resistance.

With regard to the indentation hardness $IH_{30}$ and $IH_{5000}$, it is possible to obtain a hard coat layer having an indentation hardness in the above range by adjusting the composition of the hard coat layer.

Hereinafter, the configuration of the spectacle lens of the present invention will be described in detail.

(Lens substrate)

With regard to the lens substrate, examples of the material to be usually used in the lens substrate of a spectacle lens may include plastics such as a polyurethane-based material (for example, polyurethane, polyurethane urea, polythiourethane), polycarbonate, and diethylene glycol-bis-allyl-carbonate and inorganic glass. The thickness and diameter of the lens substrate are not particularly limited. Usually, the thickness is about from 1 to 30 mm and the diameter is about from 50 to 100 mm. In a case in which the spectacle lens of the present invention is a spectacle lens for vision correction, it is usual to use those having a refractive index ne of about from 1.5 to 1.8 as the lens substrate. Colorless ones are usually used as the lens substrate, but it is also possible to use colored ones as long as the transparency is not impaired. In addition, the surface shape of the substrate on which a cured film is formed is not particularly limited, and it can be an arbitrary shape such as a flat shape, a convex shape, or a concave shape.

[Functional layer]

In the spectacle lens of the present invention, the lens substrate is provided with at least a hard coat layer. Examples of other functional layers provided on the lens substrate may include aprimer layer, an interference fringe suppressing layer, a polarizing layer, and a photochromic layer. In addition, it is also possible to further provide functional layers such as an antireflection film, a water repellent film, an ultraviolet absorbing film, an infrared absorbing film, aphotochromicfilm, and an antistatic film on the hard coat layer if necessary. With regard to functional layers other than these, known techniques related to spectacle lenses can be applied.

The hard coat layer may be directly formed on the lens substrate surface, or it may be indirectly formed thereon via one or more other functional layers.

The spectacle lens of the present invention preferably includes a lens substrate, a primer layer provided on the lens substrate, and a hard coat layer provided on the primer layer, and it more preferably includes a lens substrate, an interference fringe suppressing layer provided on the lens substrate, aprimer layer provided on the interference fringe suppressing layer, and a hard coat layer provided on the primer layer.

(Hard coat layer)

The hard coat layer is obtained, for example, by curing a curable composition containing inorganic oxide particles (hereinafter, referred to as the "component (A)") and a silicon compound (hereinafter, referred to as the "component (B) "). The curable composition preferably contains the component (A), the component (B), andapolyfunctional epoxycompound (hereinafter, referred to as the "component (C)").

Examples of the component (A) may include particles of tungsten oxide ($WO_3$), zinc oxide ($ZnO$), silicon oxide ($SiO_2$), aluminum oxide ($Al_2O_3$), titanium oxide ($TiO_2$), zirconium oxide ($ZrO_2$), tin oxide ($SnO_2$), beryllium oxide ($BeO$), antimony oxide ($Sb_2O_5$), and the like, and metal oxide particles may be used singly or two or more kinds thereof may be concurrently used. In addition, it is also possible to use composite oxide particles of two or more kinds of inorganic oxides. The particle size of the inorganic oxide particles is preferably in a range of from 5 to 30 nm from the viewpoint of achieving both abrasion resistance and optical properties.

The component (B) is a silicon compound, and it is preferably a silicon compound having a hydrolyzable group and more preferably a silane coupling agent having an organic group to be bonded to a silicon atom and a hydrolyzable group.

Examples of the hydrolyzable group may include an alkoxy group, an aryloxy group, and a hydroxyl group, and the hydrolyzable group is preferably an alkoxy group.

The silane compound is preferably an organic silicon compound represented by the following general formula (I) or a hydrolysate thereof.

$$(R^1)_a(R^3)_b Si(OR^2)_{4-(a+b)} \cdots \qquad (I)$$

In the general formula (I), a is 0 or 1 and b is 0 or 1, and preferably a is 1 and b is 0 or 1.

$R^1$ represents an organic group having a functional group such as an epoxy group such as a glycidoxy group, a vinyl group, a methacryloxy group, an acryloxy group, a mercapto group, an amino group, or a phenyl group, and preferably $R^1$ represents an organic group having an epoxy group. The functional group may be directly bonded to a silicon atom or indirectly bonded thereto via a linking group such as an alkylene group.

$R^2$ represents, for example, ahydrogenatom, an alkyl group, an acyl group, or an aryl group, and preferably $R^2$ represents an alkyl group.

The alkyl group represented by $R^2$ is, for example, a straight-chain or branched alkyl group having from 1 to 4 carbon atoms, and specific examples thereof may include a methyl group, an ethyl group, a propyl group, and a butyl group, and preferably the alkyl group is a methyl group or an ethyl group.

The acyl group represented by $R^2$ is, for example, an acyl group having from 1 to 4 carbon atoms, and specific examples thereof may include an acetyl group, a propionyl group, an oleyl group, and a benzoyl group.

The aryl group represented by $R^2$ is, for example, an aryl group having from 6 to 10 carbon atoms, and specific examples thereof may include a phenyl group, a xylyl group, and a tolyl group.

$R^3$ can be an alkyl group or an aryl group.

The alkyl group represented by $R^3$ is, for example, a straight-chain or branched alkyl group having from 1 to 6 carbon atoms, and specific examples thereof may include a methyl group, an ethyl group, a propyl group, a butyl group, a pentyl group, and a hexyl group.

The aryl group represented by $R^3$ is, for example, an aryl group having from 6 to 10 carbon atoms, and specific examples thereof may include a phenyl group, a xylyl group, and a tolyl group.

Specific examples of the component (B) may include

glycidoxymethyltrimethoxysilane,
glycidoxymethyltriethoxysilane,
α-glycidoxyethyltriethoxysilane,
β-glycidoxyethyltrimethoxysilane,
β-glycidoxyethyltriethoxysilane,

α-glycidoxypropyltrimethoxysilane,
α-glycidoxypropyltriethoxysilane,
β-glycidoxypropyltrimethoxysilane,
β-glycidoxypropyltriethoxysilane,
γ-glycidoxypropyltrimethoxysilane,
γ-glycidoxypropyltriethoxysilane,
γ-glycidoxypropyltripropoxysilane,
γ-glycidoxypropyltributoxysilane,
γ-glycidoxypropyltriphenoxysilane,
α-glycidoxybutyltrimethoxysilane,
α-glycidoxybutyltriethoxysilane,
β-glycidoxybutyltrimethoxysilane,
β-glycidoxybutyltriethoxysilane,
γ-glycidoxybutyltrimethoxysilane,
γ-glycidoxybutyltriethoxysilane,
δ-glycidoxybutyltrimethoxysilane,
δ-glycidoxybutyltriethoxysilane,
(3,4-epoxycyclohexyl)methyltrimethoxysilane,
(3,4-epoxycyclohexyl)methyltriethoxysilane,
β-(3,4-epoxycyclohexyl)ethyltrimethoxysilane,
β-(3,4-epoxycyclohexyl)ethyltriethoxysilane,
β-(3,4-epoxycyclohexyl)ethyltripropoxysilane,
β-(3,4-epoxycyclohexyl)ethyltributoxysilane,
β-(3,4-epoxycyclohexyl)ethyltriphenoxysilane,
γ-(3,4-epoxycyclohexyl)propyltrimethoxysilane,
γ-(3,4-epoxycyclohexyl)propyltriethoxysilane,
δ-(3,4-epoxycyclohexyl)butyltrimethoxysilane,
δ-(3,4-epoxycyclohexyl)butyltriethoxysilane,
glycidoxymethylmethyldimethoxysilane,
glycidoxymethylmethyldiethoxysilane,
α-glycidoxyethylmethyldimethoxysilane,
α-glycidoxyethylmethyldiethoxysilane,
β-glycidoxyethylmethyldimethoxysilane,
β-glycidoxyethylmethyldiethoxysilane,
α-glycidoxypropylmethyldimethoxysilane,
α-glycidoxypropylmethyldiethoxysilane,
β-glycidoxypropylmethyldimethoxysilane,
β-glycidoxypropylmethyldiethoxysilane,
γ-glycidoxypropylmethyldimethoxysilane,
γ-glycidoxypropylmethyldiethoxysilane,
γ-glycidoxypropylmethyldipropoxysilane,
γ-glycidoxypropylmethyldibutoxysilane,
γ-glycidoxypropylmethyldiphenoxysilane,
γ-glycidoxypropylethyldimethoxysilane,
γ-glycidoxypropylethyldiethoxysilane,
γ-lycidoxypropylvinyldimethoxysilane,
γ-glycidoxypropylvinyldiethoxysilane,
γ-glycidoxypropylphenyldimethoxysilane,
γ-glycidoxypropylphenyldiethoxysilane,

methyl silicate, ethyl silicate, n-propyl silicate, i-propyl silicate, n-butyl silicate, sec-butyl silicate, t-butylsilicate, tetraacetoxysilane,methyltrimethoxysilane, methyltriethoxysilane, methyltripropoxysilane, methyltriacetoxysilane, methyltributoxysilane, methyltripropoxysilane, methyltriamyloxysilane, methyltriphenoxysilane, methyltribenzyloxysilane, methyltriphenethyloxysilane, ethyltrimethoxysilane, ethyltriethoxysilane, vinyltrimethoxysilane, vinyltriacetoxysilane, vinyltrimethoxyethoxysilane, phenyltrimethoxysilane, phenyltriethoxysilane, phenyltriacetoxysilane, γ-chloropropyltrimethoxysilane,
γ-chloropropyltriethoxysilane,
γ-chloropropyltriacetoxysilane,

3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl)-γ-aminopropyltrimethoxysilane, N- (β-aminoethyl)-γ-aminopropylmethyldimethoxysilane, γ-aminopropylmethyldimethoxysilane, N-(β-aminoethyl)-γ-aminopropyltriethoxysilane, N-(β-aminoethyl)-γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, methylvinyldimethoxysilane, and methylvinyldiethoxysilane.

Examples of the commercially available silane coupling agent may include the KBM-303, KBM-402, KBM-403, KBE402, KBE403, KBM-1403, KBM-502, KBM-503, KBE-502, KBE-503, KBM-5103, KBM-602, KBM-603, KBM-903, KBE-903, KBE-9103, KBM-573, KBM-575, KBM-9659, KBE-585, KBM-802, KBM-803, KBE-846, and KBE-9007 of trade names manufactured by Shin-Etsu Chemical Co., Ltd.

The component (C) is a polyfunctional epoxy compound containing two or more epoxy groups in one molecule. It is preferable to contain two or three epoxy groups in one molecule.

Specific examples of the component (C) may include aliphatic epoxy compounds such as 1,6-hexanediol diglycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, diglycidyl ether of neopentyl glycol hydroxypivalate, trimethylolpropane diglycidyl ether, trimethylolpropane triglycidyl ether, glycerol diglycidyl ether, glycerol triglycidyl ether, diglycerol diglycidyl ether, diglycerol triglycidyl ether, diglycerol tetraglycidyl ether, pentaerythritol diglycidyl ether, pentaerythritol triglycidyl ether, pentaerythritol tetraglycidyl ether, dipentaerythritol tetraglycidyl ether, sorbitol tetraglycidyl ether, diglycidyl ether of tris(2-hydroxyethyl) isocyanurate, and triglycidyl ether of tris(2-hydroxyethyl) isocyanurate, alicyclic epoxy compounds such as isophorone diol diglycidyl ether and bis-2,2-hydroxycyclohexylpropane diglycidyl ether, and aromatic epoxy compounds such as resorcinol diglycidyl ether, bisphenol A diglycidyl ether, bisphenol F diglycidyl ether, bisphenol S diglycidyl ether, orthophthalic acid diglycidyl ester, phenol novolac polyglycidyl ether, and cresol novolac polyglycidyl ether. As the component (C), a compound containing two or three epoxy groups (bifunctional or trifunctional epoxy compound) is even more preferable from the viewpoint of adhesive property with the adjacent layer or the lens substrate.

Examples of the commercially available polyfunctional epoxy compound may include the EX-201, EX-211, EX-212, EX-252, EX-313, EX-314, EX-321, EX-411, EX-421, EX-512, EX-521, EX-611, EX-612, EX-614, and EX- 614B of "DENACOL" series of a trade name manufactured by Nagase ChemteX Corporation.

The curable composition can be prepared by mixing optional components such as an organic solvent, a surfactant (leveling agent), and a curing catalyst with the above components if necessary in addition to the components (A) to (C) described above.

The content of the component (A) is preferably 20% by mass or more, more preferably 30% by mass or more, and even more preferably 40% by mass or more in the solid of the curable composition, and it is preferably 80% by mass or less, preferably 70% by mass or less, and even more preferably 60% by mass or less in the solid of the curable composition.

The content of the component (B) is preferably 5% by mass or more, more preferably 10% by mass or more, and even more preferably 15% by mass or more in the solid of the curable composition, and it is preferably 80% by mass or less, preferably 70% by mass or less, and even more preferably 60% by mass or less in the solid of the curable composition.

The content of the component (C) is preferably 0% by mass or more, more preferably 10% by mass or more, and even more preferably 15% by mass or more in the solid of the curable composition, and it is preferably 50% by mass or less, more preferably 40% by mass or less, and even more preferably 30% by mass or less in the solid of the curable composition.

The filler/matrix ratio (hereinafter, also simply referred to as the "F/M ratio") is preferably 0.5 or more, more preferably 0.6 or more, and even more preferably 0.7 or more, and it is preferably 2.0 or less, more preferably 1.8 or less, and even more preferably 1.5 or less.

Incidentally, the F/Mratiomeans the mass ratio [component (A)/(component (B) + component (C))] of the component (A) to the total mass of the component (B) and the component (C).

The curing film can be formed by coating a plastic lens substrate with the curable composition and subj ecting the coated curable composition to a curing treatment (heat curing, photocuring, or the like) in accordance with the curable group. As the coating means of the curable composition, it is possible to apply a method that is usually used such as a dipping method, a spin coating method, a spray method. The curing treatment is usually conducted by heating for a curable composition containing a polyfunctional epoxy compound as the component (C). The curing treatment by heating can be conducted, for example, by placing a lens coated with the curable composition in an environment having an ambient temperature of from 50 to 150°C for about 30 minutes to 3 hours. On the other hand, the irradiation light for the curing treatment is, for example, an electron beam or ultraviolet light for the curable composition containing the component (C) having a photocurable group as a curable group. The kind of irradiation light and the irradiation conditions are appropriately selected depending on the kind of component (C). Generally, it is possible to form a hard coat layer which has a high strength and contributes to the improvement of abrasion resistance of the lens by irradiating the curable composition with ultraviolet light at an irradiation light dose of about from 500 to 2000 mJ/cm$^2$.

(Primer layer)

The primer layer is, for example, an aqueous resin layer formed from an aqueous resin composition containing a resin component and an aqueous solvent.

The aqueous solvent contained in the aqueous resin composition is, for example, water or a mixed solvent of water and a polar solvent or the like, and it is preferably water. The solid concentration in the aqueous resin composition is preferably from 1 to 60% by mass and more preferably from 5 to 40% by mass from the viewpoint of liquid stability and film-forming property. The aqueous resin composition can also contain additives such as an antioxidant, a dispersant, and a plasticizer if necessary in addition to the resin component. In addition, a commercially available aqueous resin composition may be used by being diluted with a solvent such as water, an alcohol, or propylene glycol monomethyl ether (PGM).

The aqueous resin composition can contain resin component in a state of being dissolved in an aqueous solvent or a state of being dispersed as fine particles (preferably colloidal particles). Among them, the aqueous resin composition is desirably a dispersion in which the resin component is dispersed in an aqueous solvent (preferably water) in the form of fine particles. In this case, the particle size of the resin component is preferably 0.3 μm or less from the viewpoint of dispersion stability of the composition. In addition, the pH of the aqueous resin composition is preferably about from 5.5 to 9.0 at 25°C from the viewpoint of stability. The viscosity of the aqueous resin composition is preferably from 5 to 500 mPa·s and more preferably from 10 to 50 mPa·s at 25°C from the viewpoint of coating suitability. In addition, an aqueous resin composition having the following film properties is preferable in consideration of physical properties of the aqueous resin layer to be formed. The coating film obtained by coating a glass plate with the aqueous resin composition so as to have a thickness of 1 mm and drying this for 1 hour at 120°C has a glass transition temperature Tg of from -58°C to 7°C, a pencil hardness of from 4B to 2H, and a tensile strength measured in conformity to JISK 7113 of from 15 to 69 MPa.

Examples of the resin component of the aqueous resin composition may include at least one kind selected from a polyurethane resin, an acrylic resin, or an epoxy resin, and preferably the resin component is a polyurethane resin. The aqueous resin composition containing a polyurethane resin, namely, an aqueous polyurethane resin compositioncanbe prepared, for example, by subjecting a high molecular weight polyol compound and an organic polyisocyanate compound to a urethanization reaction in a solvent that is inert to the reaction and exhibits great affinity for water together with a chain extender if necessary to obtain a prepolymer, neutralizing this prepolymer, and then dispersing the prepolymer in an aqueous solvent containing a chain extender to increase the molecular weight. For such an aqueous polyurethane resin composition and the preparation method thereof, it is possible to refer to, for example, paragraphs [0009] to [0013] in JP 3588375 B1, the paragraphs [0012] to [0021] in JP 8-34897 A, paragraphs [0010] to [0033] in JP 11-92653 A, and paragraphs [0010] to [0033] in JP 11-92655 A. In addition, as the aqueous polyurethane resin composition, it is also possible to use a commercially available waterborne urethane as it is or by diluting it with an aqueous solvent if necessary. As the commercially available waterborne polyurethane, for example, it is possible to use the "EVAFANOL" series manufactured by NICCA CHEMICAL CO. , LTD. , the "SUPERFLEX" series manufactured by DKS Co., Ltd., the "ADEKA BONTIGHTER" series manufactured by ADEKA CORPORATION, the "OLESTER" series manufactured by Mitsui Chemicals, Inc., the "VONDIC" series and "HYDRAN" series manufactured by DIC Corporation, the "IMPRANIL" series manufactured by Bayer AG, the "SOFLANATE" series manufactured by Nippon Soflan the "POIZ" series manufactured by Kao Corporation, the "SANPRENE" series manufactured by Sanyo Chemical Industries, Ltd., the "IZELAX" series manufactured by Hodogaya Chemical CO. , LTD. , and the "NEOREZ" series manufactured by Zeneca Group PLC.

It is possible to form an aqueous resin layer as a primer layer by coating the surface of a substrate with the aqueous resin composition and drying the aqueous resin composition.

As the coating method, a known coating method such as a dipping method or a spin coating method can be used. The coating conditions may be appropriately set so as to form a primer layer having a desired film thickness. Before coating, the polarizing film surface of the surface to be coated can also be subjected to a chemical treatment using an acid, an alkali, various kinds of organic solvents, or the like, a physical treatment using plasma, ultraviolet light, ozone, or the like, and a detergent treatment using various kinds of detergents. By conducting such a pretreatment, it is possible to improve the adhesive property.

After coating with the aqueous resin composition, an aqueous resin layer can be formed as a primer layer by drying the composition. The drying can be conducted, for example, by placing the member on which the primer layer is formed in an atmosphere of from room temperature to 100°C for from 5 minutes to 24 hours.

(Interference fringe suppressing layer)

The interference fringe suppressing layer preferably has an optical film thickness of from $0.2\lambda$ to $0.3\lambda$ in the light having a wavelength $\lambda$ of from 450 to 650 nm in order to suppress the interference fringe. It is possible to suppress the occurrence of interference fringe by setting the optical film thickness into this range.

The interference fringe suppressing layer is obtained, for example, by coating with a dispersion containing at least metal oxide particles and a resin.

The metal oxide particles are used from the viewpoint of adjusting the refractive index of the interference fringe suppressing layer, and examples thereof may include particles of tungsten oxide ($WO_3$), zinc oxide (ZnO), silicon oxide ($SiO_2$), aluminum oxide ($Al_2O_3$), titanium oxide ($TiO_2$) , zirconium oxide ($ZrO_2$), tin oxide ($SnO_2$), beryllium oxide (BeO), antimony oxide ($Sb_2O_5$), and the like, and the metal oxide particles may be used singly or two or more kinds thereof may be concurrently used. In addition, it is also possible to use composite oxide particles of two or more kinds of metal oxides. The particle size of the metal oxide particles is preferably in a range of from 5 to 30 nm from the viewpoint of optical properties.

Examples of the resin of the interference fringe suppressing layer may include at least one kind selected from a polyurethane resin, an acrylic resin, or an epoxy resin, and preferably the resin is a polyurethane resin and more preferably it is an aqueous resin composition containing a polyurethane resin, namely, an aqueous polyurethane resin composition. Preferred examples of the aqueous polyurethane resin composition may include the resins exemplified in the primer layer.

The dispersion may contain an aqueous solvent. The aqueous solvent is, for example, water or a mixed solvent of water and a polar solvent or the like, and preferably it is water. The solid concentration in the aqueous resin composition is preferably from 1 to 60% by mass and more preferably from 5 to 40% by mass from the viewpoint of liquid stability and film-forming property. The aqueous resin composition can also contain additives such as an antioxidant, a dispersant, and a plasticizer if necessary in addition to the resin component. In addition, a commercially available aqueous resin composition may be used by being diluted with a solvent such as water, an alcohol, or propylene glycol monomethyl ether (PGM).

(Antireflection layer)

The antiref lection layer may be provided on the hard coat layer. The antireflection layer, for example, has a configuration in which a low refractive index layer and a high refractive index layer are alternately disposed. The antireflection layer has preferably from 4 to 10 layers and more preferably from 5 to 8 layers.

The refractive index of the low refractive index layer is preferably from 1.35 to 1.80 and more preferably from 1.45 to 1. 50 at a wavelength of from 500 to 550 nm. The low refractive index layer is formed of an inorganic oxide, and preferably it is formed of $SiO_2$.

The refractive index of the high refractive index layer is preferably from 1.90 to 2.60 and more preferably from 2.00 to 2.40 at a wavelength of from 500 to 550 nm.

The high refractive index layer is, for example, formed of an inorganic oxide. The inorganic oxide used in the high refractive index layer is preferably at least one kind of inorganic oxide selected from $ZrO_2$, $Ta_2O_5$, $Y_2O_3$, $TiO_2$, $Nb_2O_5$, and $Al_2O_3$ and more preferably $ZrO_2$ or $Ta_2O_5$.

The spectacle lens of the present invention may have a hard coat layer and other functional layers only on the surface of the lens substrate or on the rear surface thereof as well. The spectacle lens is preferably a plastic lens for spectacle of which the lens substrate is a plastic.

Above, the following invention is disclosed in the present specification.

[1] A spectacle lens including a lens substrate and a hard coat layer having a film thickness of 5 $\mu$m or more and 100 $\mu$m or less, in which

an indentation hardness of the hard coat layer at 30 mgf load is 25 mgf/$\mu$m$^2$ or more and 80 mgf/$\mu$m$^2$ or less.

[2] A spectacle lens including a lens substrate and a hard coat layer having a film thickness of 5 $\mu$m or more and 100 $\mu$m or less, in which

an indentation hardness of the hard coat layer at 5000 mgf load is 30 mgf/$\mu$m$^2$ or more and 80 mgf/$\mu$m$^2$ or less.

Examples

Hereinafter, the present invention will be described in more detail with reference to Examples, but the present invention is not limited to these Examples. Incidentally, the evaluation of the plastic lenses obtained in Examples and Comparative Examples were carried out as follows.

[Average film thickness of hard coat layer]

The average film thickness of the hard coat layer was measured by using a lens substrate on which the hard coat layer was formed and a non-contact type film thickness measuring apparatus (non-contact film thickness measuring instrument FF 8 manufactured by SystemRoad co., Ltd.) by the optical interference method.

[Indentation hardness]

The indentation hardness of the surface of the lens substrate on which a hard coat layer was formed but before the AR layer was formed was measured at an indentation load of 30 mgf and 5000 mgf by using the Elionixhardness measuring apparatus ENT-2100.

[Test for durability against hot water]

The surface of the spectacle lens was cut by 1 cm with a cutter knife so that the cuts intersect vertically and horizontally, the spectacle lens was immersed in hot water at 80°C, and the generation of cracks was confirmed every 2 hours.

[Test for durability in QUV]

The surface of the spectacle lens was cut by 1 cm with a cutter knife so that the cuts intersect vertically and horizontally, the spectacle lens was (1) irradiated with ultraviolet light of 0.77 W for 4 hours and then (2) put in a high-humidity environment (humidity: 90%) for 4 hours in the QUV ultraviolet fluorescent tube type accelerated weathering tester manufactured by Q-Lab Corporation. The cycle consisting of (1) and (2) was repeated for the regulated time, and the time until cracks were generated on the hard coat layer was evaluated.

[Diamond scratch test (DS test)]

A diamond stylus having a tip curvature radius of 50 μm was installed to a continuous load type surface measuring machine (Type 22 manufactured by Shinto Scientific Co., ltd.), the spectacle lens and the diamond stylus were linearly relatively moved at a velocity of 10 mm/sec while gradually increasing the contact load between them at 1 g/sec to form scratches. The load was determined from the position at which the scratches started to be visually recognized under a fluorescent lamp and adopted as the "scratch generating load", and the scratches were observed under a microscope, and the load was determined from the position at which the surface film of the spectacle lens started to be cut and adopted as the "film peeling off load".

Incidentally, the color of the scratches to be formed is in a state indicating white as the surface film is cut. In this manner, scratches conspicuous even with a naked eye are formed when the surface film is cut.

[Abrasion resistance test]

The spectacle lens sample was subjected to a reciprocating wear test using the Bayer testing machine (trade name: COLTS Laboratories BTE. ABRATION TESTER) manufactured by COLTS Laboratories. This test is intended to fix the lens on one surface (convex surface) of a tray containing the regulated sands regulated by COLTS Laboratories and to wear the surface of the lens by vibrating the tray for 4 minutes at a vibration amplitude of 4 inches and 150 cycles per minute.

After the reciprocating wear test, the haze value of the plastic lens sample was measured by using a haze meter (product name : MH-150 manufactured by MURAKAMI COLOR RESEARCH LABORATORY CO., Ltd.). In addition, the plastic lens substrate on which a cured film was not formed (referred to as the standard plastic lens) was also subjected to the same test, the Bayer value was determined from the ratio of the amount of change in haze value before and after the two tests.

The Bayer value R is expressed by the following equation where ΔH1 denotes the amount of change in haze value of the plastic lens for evaluation and ΔH2 denotes the amount of change in haze value of the standard plastic lens.

$$R = \Delta H2/\Delta H1 \quad \ldots \quad (2)$$

[Example 1]

The plastic lens substrate (plastic lens for spectacle, trade name: EYNOA manufactured by HOYA CORPORATION, refractive index: 1.67) was washed.

(Primer layer)

To 305.0 g of methanol, 126 g of 4-hydroxy-4-methyl-2-pentanone (DAA) and 350.5 g of water were added, 217.5 g of a thermoplastic resin (SUPERFLEX 170 manufactured by DKS Co., Ltd.) and 1.0 g of a leveling agent (Y-7006 manufactured by Dow Corning Toray) were further added thereto, and the mixture was stirred for 24 hours at 20°C, thereby obtaining a primer liquid.

The primer liquid thus obtained was applied on the plastic lens substrate by a dipping method and dried and solidified for 20 minutes at 100°C, thereby forming a primer layer on both surfaces of the lens substrate.

(Hard coat layer)

The hard coat liquid prepared as presented in Table 1 was applied on the lens substrate on which the primer layer was formed by a spray method such that the thickness of the cured film to be formed became from 20 to 40 μm.

Thereafter, the hard coat liquid was pre-cured for 20 minutes at 75°C and subsequently cured for 2 hours at 110°C, thereby fabricating a spectacle lens having a hard coat layer on both surfaces.

Through the above processes, a spectacle lens respectively having a hard coat layer on both surfaces of the lens substrate via a primer layer.

(AR layer)

Next, the antireflection layer (AR layer) in which the layers described in the table were alternately laminated was formed on the hard coat layer by a vacuum deposition method, thereby obtaining a plastic lens. The plastic lens thus obtained was evaluated, and the results thereof are presented in the following tables.

[Examples 2 to 14, Comparative Examples 1 to 3, and Reference Example 1]

The plastic lenses were obtained in the same manner as in Example 1 except that the configurations of the primer layer, the hard coat layer, and the AR layer were as those presented in the following tables. The plastic lenses thus obtained were evaluated, and the results thereof are presented in the following tables.

The reference signs in the tables are as follows.

160: plastic lens for spectacle, trade name: EYAS manufactured by HOYA CORPORATION, refractive index: 1.60
167: plastic lens for spectacle, trade name: EYNOA manufactured by HOYA CORPORATION, refractive index: 1.67
170: plastic lens for spectacle, trade name: EYRY manufactured by HOYA CORPORATION, refractive index: 1.70

[Table 1-1]

Table 1-1

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Kind of hard coat liquid | | | HC1 | HC2 | HC3 | HC4 | HC5 | HC6 | HC7 | HC8 | HC9 | HC10 |
| Blended amount*2 (parts by mass) | Inorganic oxide particles: component (A) | Kind | $SiO_2$ | $SiO_2$ | $SiO_2$ | $SiO_2$ | $SiO_2$ | $SiO_2$ | $SiO_2$ | $SiO_2$ | $SiO_2$ | $SiO_2$ |
| | | Blended amount | 50 | 52 | 52 | 54 | 54 | 50 | 50 | 50 | 50 | 44 |
| | Silane coupling agent: component (B) | Kind | KBM403 | KBM403 | KBM403 | KBM403 | KBM403 | KBM403 | KBM403 | KBM403 | KBM403 | KBM403 |
| | | Blended amount | 30 | 29 | 24 | 23 | 18 | 50 | 50 | 50 | 50 | 33 |
| | Epoxy compound: component (C) | Kind | EX-321 | EX-321 | EX-321 | EX-321 | EX-321 | - | - | - | - | EX-321 |
| | | Blended amount | 20 | 19 | 24 | 23 | 27 | 0 | 0 | 0 | 0 | 22 |
| | F/M*1 | | 1.0 | 1.1 | 1.1 | 1.2 | 1.2 | 1.0 | 1.0 | 1.0 | 1.0 | 0.8 |
| *1 filler/matrix mass ratio<br>*2 based on solid<br>SiO2: silica sol (trade name: PGM-ST manufactured by NISSAN CHEMICAL INDUSTRIES, LTD.)<br>KBM403: γ-glycidoxypropyltrimethoxysilane (trade name: KBM403 manufactured by Shin-Etsu Chemical Co., Ltd.)<br>xEX-321: trimethylolpropane oil glycidyl ether (di- to tri-functional, trade name: EX-321 manufactured by Nagase ChemteX Corporation) | | | | | | | | | | | | |

[Table 1-2]

Table 1-2

| | | | Example 11 | Example 12 | Example 13 | Example 14 | Comparative Example 1 | Comparative Example 2 | Comparative Example 3 | Reference Example 1 |
|---|---|---|---|---|---|---|---|---|---|---|
| Kind of hard coat liquid | | | HC11 | HC12 | HC13 | HC14 | HC15 | HC16 | HC17 | HC18 |
| Blended amount*2 (parts by mass) | Inorganic oxide particles: component (A) | Kind | $SiO_2$ | $SnO_2$ | $SnO_2$ | $SnO_2$ | $SiO_2$ | $SiO_2$ | $SiO_2$ | $SnO_2$ |
| | | Blended amount | 44 | 51 | 50 | 50 | 44 | 44 | 44 | 51 |
| | Silane coupling agent: component (B) | Kind | KBM403 | KBM403 | KBM403 | KBM403 | KBM403 | KBM403 | KBM403 | KBM403 |
| | | Blended amount | 33 | 49 | 50 | 50 | 33 | 33 | 33 | 49 |
| | Epoxy compound: component (C) | Kind | EX-321 | - | - | - | EX-321 | EX-321 | EX-321 | - |
| | | Blended amount | 22 | 0 | 0 | 0 | 22 | 22 | 22 | 0 |
| | F/M*1 | | 0.8 | 1.0 | 1.0 | 1.0 | 0.8 | 0.8 | 0.8 | 1.0 |

*1 filler/matrix mass ratio *2 based on solid

$SiO_2$: silica sol (trade name: PGM-ST manufactured by NISSAN CHEMICAL INDUSTRIES, LTD.)

$SnO_2$: tin oxide sol (trade name: HX-405MH manufactured by NISSAN CHEMICAL INDUSTRIES, LTD.)

KBM403: γ-glycidoxypropyltrimethoxysilane (trade name: KBM403 manufactured by Shin-Etsu Chemical Co., Ltd.)

EX-321: trimethylolpropane oil glycidyl ether (bi- to trifunctional, trade name: EX-321 manufactured by Nagase ChemteX Corporation)

[Table 2-1]

Table 2-1

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| | Substrate | 167 | 167 | 167 | 167 | 167 | 167 | 167 | 167 | 167 | 160 |
| Primer layer | Film thickness ($\mu$m) | 1.7 | 1.7 | 1.7 | 1.7 | 1.7 | 1.6 | 1.6 | 1.6 | 1.8 | 1.8 |
| Hard coat layer | Kind of hard coat liquid | HC1 | HC2 | HC3 | HC4 | HC5 | HC6 | HC7 | HC8 | HC9 | HC10 |
| | Curing temperature (°C) | 110 | 110 | 110 | 110 | 110 | 100 | 100 | 100 | 100 | 100 |
| | Curing time (h) | 1 | 1 | 1 | 1 | 1 | 2 | 2 | 2 | 2 | 2 |
| | Average film thickness ($\mu$m) | 20 | 20 | 19 | 20 | 19 | 12 | 19 | 26 | 35 | 19 |
| AR layer | AR film | AR1 | AR1 | AR1 | AR1 | AR1 | AR2 | AR2 | AR2 | AR2 | AR2 |
| | AR low refractive index material | $SiO_2$ | $SiO_2$ | $SiO_2$ | $SiO_2$ | $SiO_2$ | $SiO_2$ | $SiO_2$ | $SiO_2$ | $SiO_2$ | $SiO_2$ |
| | AR high refractive index material | $ZrO_2$ | $ZrO_2$ | $ZrO_2$ | $ZrO_2$ | $ZrO_2$ | $Ta_2O_5$ | $Ta_2O_5$ | $Ta_2O_5$ | $Ta_2O_5$ | $Ta_2O_5$ |
| | Number of laminated layers | 8 | 8 | 8 | 8 | 8 | 8 | 8 | 8 | 8 | 8 |

*1 filler/matrix mass ratio

[Table 2-2]

Table 2-2

| | | Example 11 | Example 12 | Example 13 | Example 14 | Comparative Example 1 | Comparative Example 2 | Comparative Example 3 | Preference Example 1 |
|---|---|---|---|---|---|---|---|---|---|
| Substrate | | 170 | 167 | 167 | 167 | 167 | 167 | 167 | 167 |
| Primer layer | Film thickness ($\mu$m) | 1.8 | *2 | *2 | *2 | 1.6 | 1.6 | 1.6 | *2 |
| Hard coat layer | Kind of hard coat liquid | HC11 | HC12 | HC13 | HC14 | HC15 | HC16 | HC17 | HC18 |
| | Curing temperature (°C) | 100 | 100 | 100 | 100 | 100 | 100 | 100 | 100 |
| | Curing time (h) | 2 | 2 | 2 | 2 | 2 | 2 | 2 | 2 |
| | Average film thickness ($\mu$m) | 23 | 7 | 10 | 14 | 19 | 26 | 37 | 4 |
| AR layer | AR film | AR2 | AR1 | AR1 | AR1 | AR2 | AR2 | AR2 | AR1 |
| | AR low refractive index material | $SiO_2$ | $SiO_2$ | $SiO_2$ | $SiO_2$ | $SiO_2$ | $SiO_2$ | $SiO_2$ | $SiO_2$ |
| | AR high refractive index material | $Ta_2O_5$ | $ZrO_2$ | $ZrO_2$ | $ZrO_2$ | $Ta_2O_5$ | $Ta_2O_5$ | $Ta_2O_5$ | $ZrO_2$ |
| | Number of laminated layers | 8 | 8 | 8 | 8 | 8 | 8 | 8 | 8 |
| *1 filler/matrix mass ratio *2 without primer layer | | | | | | | | | |

[Table 3-1]

Table 3-1

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Lens substrate | | 167 | 167 | 167 | 167 | 167 | 167 | 167 | 167 | 167 | 160 |
| Average film thickness of hard coat layer ($\mu$m) | | 20 | 20 | 19 | 20 | 19 | 12 | 19 | 26 | 35 | 19 |
| Indentation hardness | $IH_{30}$ (mgf/$\mu$m$^2$) | 69 | 74 | 77 | 75 | 71 | 62 | 50 | 44 | 48 | 40 |
| | $IH_{5000}$ (mgf/$\mu$m$^2$) | 55 | 59 | 58 | 61 | 59 | 65 | 58 | 54 | 48 | 43 |
| | $IH_{30}$-$IH_{5000}$ | 14 | 15 | 19 | 14 | 13 | -3 | -8 | -10 | 0 | -3 |
| Evaluation | Test for durability against hot water [hr] | 6hr | 6hr | 8hr | 6hr | 8hr | 1hr | 1hr | 1hr | 1hr | >20hr |
| | Test for durability against QUV [hr] | 100hr | 100hr | 100hr | 100hr | 100hr | 50hr | 50hr | 50hr | 50hr | >150hr |
| | DS test (scratch generating load) [gf] | 110 | 110 | 110 | 110 | 110 | 60 | 100 | 130 | 100 | 100 |
| | DS test (film peeling off load) [gf] | 241 | 221 | 245 | 202 | 204 | 189 | 250 | 338 | 390 | 250 |
| | Bayer value (HB) | 19 | 21 | 19 | 17 | 15 | 9.5 | 9.8 | 8.3 | 7.8 | 7.5 |

[Table 3-2]

Table 3-2

| | | Example 11 | Example 12 | Example 13 | Example 14 | Comparative Example 1 | Comparative Example 2 | Comparative Example 3 | Reference Example 1 |
|---|---|---|---|---|---|---|---|---|---|
| Lens substrate | | 170 | 167 | 167 | 167 | 167 | 167 | 167 | 167 |
| Average film thickness of hard coat layer ($\mu$m) | | 23 | 7 | 10 | 14 | 19 | 26 | 37 | 4 |
| Indentation hardness | $IH_{30}$ (mgf/$\mu$m$^2$) | 42 | 59 | 59 | 59 | 16 | 22 | 22 | 62 |
| | $IH_{5000}$ (mgf/$\mu$m$^2$) | 42 | 38 | 38 | 38 | 23 | 27 | 26 | 34 |
| | $IH_{30}$-$IH_{5000}$ | 0 | 21 | 21 | 21 | -6 | -6 | -4 | 19 |
| Evaluation | Test for durability against hot water [hr] | 8hr | 8hr | 8hr | 8hr | - | - | - | 8hr |
| | Test for durability against QUV [hr] | >150hr | 150 | 150 | 150 | - | - | - | 150 |
| | DS test (scratch generating load) [gf] | 90 | 58 | 70 | 90 | 30 | 40 | 50 | 42 |
| | DS test (film peeling off load) [gf] | 350 | 121 | 156 | 196 | 243 | 350 | 500 | 69 |
| | Bayer value (HB) | 6.8 | 19.7 | 20.7 | 19.6 | 5.1 | 5.8 | 4.8 | 19.4 |

It can be seen that a high film peeling off load and excellent scratch resistance are obtained as the film thickness of the hard coat layer is in a predetermined range when the results for Examples are compared with those for Comparative Examples. Additionally, it can be seen that the spectacle lens exhibits excellent abrasion resistance from the numerical value of scratch generating load and the Bayer value as the indentation hardness at 30 mgf load is in a predetermined range.

In addition, from the above results, it can be seen that a spectacle lens which exhibits excellent crack resistance while exhibiting excellent scratch resistance and excellent abrasion resistance is obtained as the value of $IH_{30}$ - $IH_{5000}$ is a predetermined positive value or more.

**Claims**

1.  A spectacle lens comprising:

    a lens substrate; and
    a hard coat layer having a film thickness of 5 $\mu$m or more and 100 $\mu$m or less, wherein
    an indentation hardness of the hard coat layer at 30 mgf load is 25 mgf/$\mu$m$^2$ or more and 100 mgf/$\mu$m$^2$ or less.

2.  The spectacle lens according to claim 1, wherein a film thickness of the hard coat layer is 7 $\mu$m or more and 100 $\mu$m or less.

3.  The spectacle lens according to claim 1 or 2, wherein an indentation hardness of the hard coat layer at 5000 mgf load is 30 mgf/$\mu$m$^2$ or more and 100 mgf/$\mu$m$^2$ or less.

4.  The spectacle lens according to any one of claims 1 to 3, wherein a difference ($IH_{30}$ - $IH_{5000}$) between an indentation hardness $IH_{5000}$ at 5000 mgf load and an indentation hardness $IH_{30}$ at 30 mgf load of the hard coat layer is 3 mgf/$\mu$m$^2$ or more.

5.  The spectacle lens according to any one of claims 1 to 4, wherein the hard coat layer is obtained by curing a curable composition containing inorganic oxide particles and a silicon compound having a hydrolyzable group.

6.  The spectacle lens according to claim 5, wherein the curable composition further contains a polyfunctional epoxy compound.

7.  The spectacle lens according to any one of claims 1 to 6, further comprising a primer layer between the lens substrate and the hard coat layer.

8.  The spectacle lens according to any one of claims 1 to 7, further comprising an interference fringe suppressing layer between the lens substrate and the hard coat layer.

9.  The spectacle lens according to any one of claims 1 to 8, further comprising an antireflection layer on the hard coat layer.

## INTERNATIONAL SEARCH REPORT

International application No.

PCT/JP2015/062599

### A. CLASSIFICATION OF SUBJECT MATTER
*G02B1/14*(2015.01)i, *B32B27/00*(2006.01)i, *G02B1/115*(2015.01)i, *G02C7/02* (2006.01)i

According to International Patent Classification (IPC) or to both national classification and IPC

### B. FIELDS SEARCHED

Minimum documentation searched (classification system followed by classification symbols)
G02B1/14, B32B27/00, G02B1/115, G02C7/02

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2010-009032 A  (Hoya Corp.),<br>14 January 2010 (14.01.2010),<br>paragraphs [0012] to [0013], [0027], [0051] to [0082]<br>& US 2009/0297807 A1    & EP 2128657 A1<br>& EP 2275841 A2 | 1-2,5-7,9<br>3-4,8 |
| Y | JP 2009-237551 A  (Keio University),<br>15 October 2009 (15.10.2009),<br>paragraphs [0086] to [0087]; table 3<br>& US 2009/0220774 A1    & CN 101526633 A<br>& KR 10-2009-0094751 A | 3-4 |
| Y | JP 2011-113070 A  (Hoya Corp.),<br>09 June 2011 (09.06.2011),<br>paragraph [0055]<br>(Family: none) | 8 |

☐ Further documents are listed in the continuation of Box C.      ☐ See patent family annex.

| | |
|---|---|
| * Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    15 June 2015 (15.06.15) | Date of mailing of the international search report<br>    14 July 2015 (14.07.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013205777 A
- JP 3588375 B
- JP 8034897 A
- JP 11092653 A
- JP 11092655 A